# EUROPEAN PATENT APPLICATION

(11) **EP 1 453 321 A2**
(43) Date of publication of application: **01.09.2004**
(21) Application number: 04001823.6
(22) Date of filing: 28.01.2004
(51) Int. Cl.: H04N 7/26

(54) **Video encoder capable of differentially encoding image of speaker during visual call and method for compressing video signal**

(30) Priority: 10.02.2003 KR 2003008255
(71) Applicant: Samsung Electronics Co., Ltd., Suwon-si, Gyeonggi-do (KR)
(72) Inventor: Lee, Seung-Cheol Samsung Electronics Co., Ltd., Suwon-si Gyeonggi-do (KR); Shin, Dae-Kyu Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

A video encoder differentially encodes an image of a speaker during a visual call The video encoder comprises a motion estimator for estimating motion of an individual from an input video signal, and calculating a motion vector of the individual; a speaker region detector for detecting a speaker region representing an contour of a speaker from the motion vector; a DCT section for calculating DCT coefficients by DCT-transforming a video signal outputted from the motion estimator; a face region detector for detecting a face region of the speaker from the speaker region based on the DCT coefficients, and generating a differential quantization table by distinguishing the detected face region from non-face regions; an adaptive bit rate controller for differential setting a quantization step size for quantization based on the speaker region; and a quantizer for quantizing the DCT coefficients according to the quantization step size and the differential quantization table.

## Description

The present invention relates generally to a video encoder for image communication and an image compression method using the same, and in particular, to a video encoder for image communication, capable of applying different image qualities to a face region and other regions of a speaker (or user), and an image compression method using the same.

The development of a communication technology has brought about a rapid progress of an image compression technology and a multimedia transmission technology. Further, as image pickup devices such as a digital camera are popularized, there is a demand for a technology capable of exchanging image data between the image pickup device and its external devices. In addition, when talking over a mobile phone, a user of the mobile phone generally desires to enjoy image communication rather than voice communication.

In order to meet the user's needs, image compression technologies such as MPEG1 (Moving Picture Expert Group 1), MPEG2, MPEG4 and H.263 have been proposed, and image communication using a mobile phone based on theses image compression technologies has been realized and commercialized.

MPEG4 refers to a standardization organization for compression and decompression of moving images and associated audio signals, which is working under the a name of WG11 (Working Group 11) in SC29 (Sub-Committee 29) that is an organization for enacting an international standard specification for a multimedia encoding technology, enlisted under JTC (Joint Technical Committee) jointly established by ISO (International Standardization Organization) and IEC (International Electrotechnical Commission). MPEG1 and MPEG2 are technologies for compressing, into a bit stream, moving images and voice signals which are received in a particular size according to predetermined data throughput, and transmitting the bit stream. A receiver receiving a bit stream compressed by MPEG2 decodes the received bit stream and outputs the decoded bit stream through its display or speaker section.

H.263 is a moving image compression technology proposed by ITU-T (International Telecommunications Union - Telecommunication Standardization Sector), for video conference or visual call over a communication line having a low transmission rate of below 64Kbps.

An H.263/MPEG4 video encoder included in a mobile phone which can support a bidirectional visual call over the future CDMA (Code Division Multiple Access) EVDO (Evolution Data Only) and UMTS (Universal Mobile Telecommunications System) networks, receives images from a camera mounted on the mobile phone, compresses the received images by an efficient compression technique, and delivers the compressed images to a transmission protocol layer. The H.263/MPEG4 video encoder is optimized to be suitable for a mobile phone that has the limited resources and calculation capability, and properly adjusts image quality and a size of the bit stream for a narrowband communication environment of below 128Kbps.

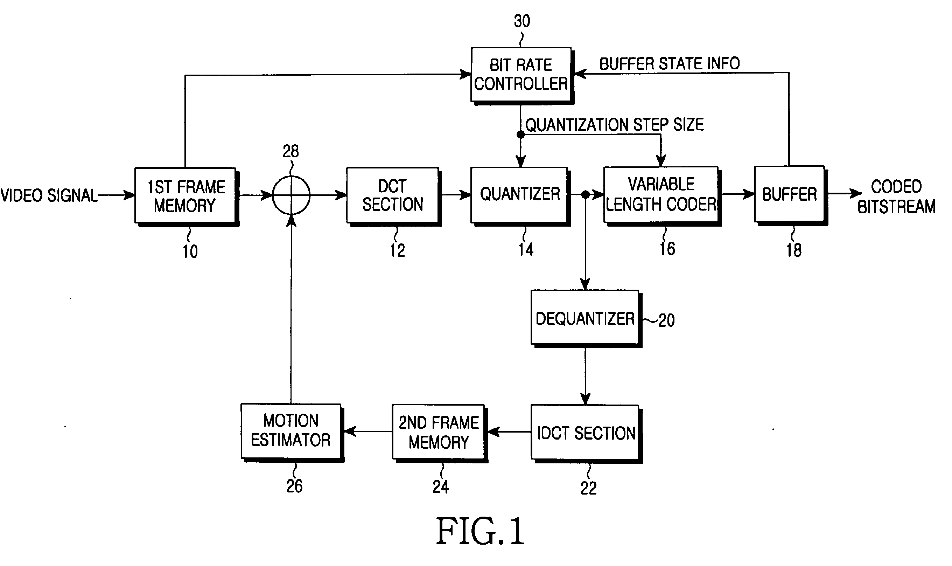

FIG 1 is a block diagram illustrating a conventional video encoder, e.g., an MPEG2 image encoding system, for compressing a digital video signal. Referring to FIG 1, an input video signal frame is applied to a first frame memory 10. The signal frame is stored in the first frame memory 10 as consecutive blocks of pixel data so that the frame can be processed block by block. A frame block generally has an 8×8, or 16×16 pixel size.

A DCT (discrete Cosine Transform) section 12 DCT-transforms a video signal, which is read from the first frame memory 10 as a block, and generates DCT coefficients. A bit rate controller 30 provides a quantizer 14 with quantization step size information for determining a quantization table to be used for quantization by the quantizer 14 to match a target transmission bit rate. The quantizer 14 determines a quantization table based on the quantization step size information, and quantizes the DCT coefficients according to the determined quantization table.

The quantized DCT coefficients are scanned in a zigzag pattern, and then provided to a variable length coder 16. The variable length coder 16 converts the scanned DCT coefficients into variable length-coded data. The variable length-coded DCT coefficients are converted into consecutive bit streams by a bit stream generator (not shown). The bit stream is stored in a buffer 18 for a predetermined time, and outputted according to an input signal. The buffer 18 provides the bit rate controller 30 with buffer state information indicating how much bit stream it can store. The bit rate controller 30 then determines a quantization step size based on the buffer state information, and provides the determined quantization step size information to the quantizer 14 and the variable length coder 16. As a result, the quantizer 16 quantizes the DCT coefficients based on the quantization step size information, and the variable length coder 16 variably encodes the quantized DCT coefficients based on the quantization step size information.

The DCT coefficients quantized by the quantizer 14 are dequantized by a dequantizer 20. The DCT coefficients dequantized by the dequantizer 20 are IDCT (Inverse Discrete Cosine Transform)-transformed into pixel data of a block unit by an IDCT section 22. The block-unit pixel data is stored in a second frame memory 24. All blocks of one video frame are sequentially restored and then stored in the second frame memory 24. The restored image frame stored in the second frame memory 24 is used by a motion estimator 26 as a reference frame for estimating the object of motion from the restored image.

After all blocks of a first video frame are encoded by the video encoder of FIG. 1, a second video frame is applied to the video encoder. The motion estimator 26 searches a search area of a reference frame stored in the second frame memory 24 for an area most similar to a first macro block (MB) of the second frame. Commonly, the search area is comprised of a plurality of candidate macro blocks. The motion estimator 26 compares a macro block with a reference area on a pixel-to-pixel basis, while shifting the reference area having the same pixel size as the macro block up and down as well as left and right within a search area. Commonly, the macro block has an 8x8, or 16x16 size. For motion estimation, general search algorithm or block matching technique, such as full searching block matching algorithm (FBMA), three step search (TSS), diamond search, and hierachical motion estimation, is used. Through this comparison process, a motion vector (MV) indicating a position relationship between a most similar reference area of the reference frame and a macro block of the second image frame, compared by the motion estimator 26, is determined.

An adder 28 adds a first macro block of the second frame to the most similar reference area of the reference frame, to calculate a difference between the first macro block of the second frame and the most similar reference area of the reference frame. The difference is encoded along with the motion vector MV through the DCT section 12, the quantizer 14 and the variable length coder 16. Although it is assumed herein that the difference and the motion vector are calculated through separate processes by separate modules, it should be noted that the difference and the motion vector can be calculated by a single module. The difference is applied to the dequantizer 20 and the IDCT section 22, and also stored in the second frame memory 24 as restored pixel data, for motion estimation of the next frame. The above process is sequentially applied to all blocks of the second frame.

The reference frame used for motion estimation is not an original image frame, but a frame restored by decoding the previously coded, i.e., quantized DCT coefficients. This is to minimize an error between a video encoder and a video decoder by performing the same process as used when receiving image data encoded by the video encoder and decoding the received image data.

In the case of a video codec (encoder/decoder) for image communication using a mobile phone to which the above-stated video encoder and decoder are applied, only intra-picture (I picture) and predictive-picture (P picture) frames are used considering a delay time and an amount of operations. In order to match its bandwidth to a communication bandwidth, the video encoder generates a bit stream with a prescribed size while controlling image quality by dynamically applying a quantization value according to the contents of an image.

The I picture represents coded intra-image or coded intra-frame image. The I picture serves to secure independency of a group of pictures (GOP), and encode everything on the screen. The I picture is encoded in the same order as an original image. The P picture represents a coded inter-frame forward predictive image. In some cases, the P picture includes a coded intra-image at a sub-block part on the screen. The P picture is encoded in the same order as an original image.

Therefore, in the case of an image with high mobility or a complicated screen, the number of bits is increased. The increase in the number of bits causes an increase in a quantization value, and the increase in the quantization value degrades image quality but increases compressibility. In contrast, in the case of an image with low mobility and a simple screen, it is possible to maintain the quality of the original image even with a decreased quantization value.

Generally, in the case of a visual call, there is a high probability that the number of individuals (or population) except a background in the entire image will be limited, and a part of the individuals has a very important meaning for a speaker (or user). That is, during a visual call, the background has the lowest priority (or importance), people around the speaker or individuals near the speaker have the next low priority, and the speaker himself or herself has the top priority. In particular, a face region of the speaker has the highest priority among others during a visual call.

However, the existing video encoder for image communication compresses the entire image without considering the individuals. That is, the conventional video encoder for image communication applies the same compressibility to the entire image.

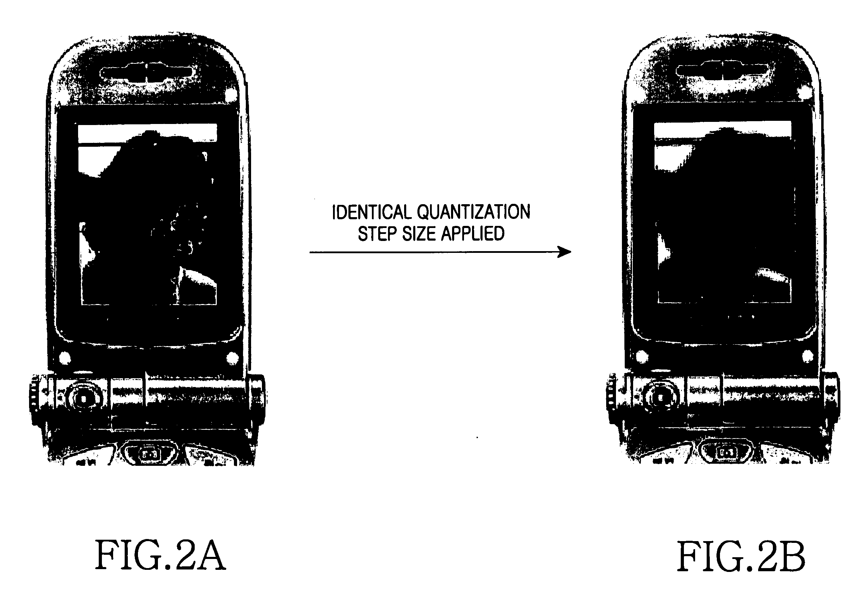

FIGs. 2A and 2B illustrate how image quality is changed when the identical compressibility or quantization step size is applied to the entire image. As illustrated, if the identical quantization step size is applied to the entire image, the quality of a compressed image displayed on the screen is degraded as a whole. That is, the conventional video encoder for image communication cannot distinguish the parts required to maintain high image quality from the parts required not to maintain high image quality out of the entire image.

At present, MPEG proposes a technique for separately encoding individuals. However, a purpose of precisely distinguishing the individuals is to use corresponding individuals on various backgrounds. Therefore, it is difficult to realize such a technique in real time and mobile communication environments. That is, the standard video codec for image communication, proposed by 3PGG/3GPP2, does not consider distinguishing individuals.

It is the object of the present invention to provide a video encoder for image communication, capable of adaptively maintaining higher image quality for a region presumed as a face of a speaker compared with the other regions, and an image compression method using the same.

This object is solved by the subject matters of the independent claims.

Preferred embodiments are defined in the dependent claims.

It is an aspect of the present invention to provide a video encoder for image communication, capable of easily applying a standard video encoder for image communication to adaptively maintain higher image quality for a region presumed as a face of a speaker compared with the other regions, and an image compression method using the same.

It is a further aspect of the present invention to provide a video encoder for image communication, capable of displaying a face region of a speaker with higher image quality compared with the other regions when a face color region is detected using motion vector information of a moving image and color information of the face region of the speaker, and an image compression method using the same.

To achieve the above object and aspects, there is provided a video encoder for encoding a video signal through discrete cosine transform (DCT) and motion estimation. The video encoder comprises a motion estimator for estimating motion of an individual from an input video signal, and calculating a motion vector of the individual; a speaker region detector for detecting a speaker region representing a contour of a speaker from the motion vector; a DCT section for calculating DCT coefficients by DCT-transforming a video signal outputted from the motion estimator; a face region detector for detecting a face region of the speaker from the speaker region based on the DCT coefficients, and generating a differential quantization table by distinguishing the detected face region from non-face regions; an adaptive bit rate controller for differentially setting a quantization step size for quantization based on the speaker region; and a quantizer for quantizing the DCT coefficients according to the quantization step size and the differential quantization table.

Preferably, the adaptive bit rate controller differential sets the quantization step size based on a particular one of the speaker region and the face region. Further, the motion estimator estimates motion of the individual by comparing a current frame of the video signal with a reference frame obtained by encoding a previous frame of the video signal and then compensating for motion of the coded previous frame at intervals of pixels on a pixel-to-pixel basis, thereby to detect a most similar pixel, and calculates a motion vector corresponding to the estimated motion of the individual.

Further, the speaker region detector calculates a background image vector and a foreground image vector according to consistency of a size and a direction of the motion vector from the motion vector, and detects a speaker region from the background image vector and the foreground image vector.

The face region detector compares a DC (Direct Current) value of a red component with a DC value of a blue component for a same region from DCT coefficients corresponding to the speaker region detected by the speaker region detector among DCT coefficients generated by the DCT section. If the red component is greater than the blue component and also greater than a prescribed threshold value, the face region detector determines a region corresponding to the compared DCT coefficient out of the speaker region as a face region of the speaker.

The video encoder further comprises a variable length coder for performing variable length coding on the DCT coefficients differentially quantized by the quantizer. In addition, the video encoder further comprises a dequantizer for performing dequantization on the DCT coefficients differentially encoded by the quantizer; an inverse discrete cosine transform (IDCT) section for performing IDCT on the dequantized DCT coefficients; and a motion compensator for compensating for motion of the individual by comparing an IDCT-transformed previous input video signal with an IDCT-transformed input video signal. The motion compensator calculates the motion vector for an input video signal based on the motion-compensated video signal from the motion compensator.

To achieve the above object and aspects, there is provided a video signal compression method for image communication using a video encoder for encoding a video signal through discrete cosine transform (DCT) and motion estimation, the method comprising the steps of (a) estimating motion of an individual from an input video signal, and calculating a motion vector of the individual; (b) detecting a speaker region representing an contour of a speaker from the motion vector; (c) calculating DCT coefficients by DCT-transforming the video signal; (d) detecting a face region of the speaker from the speaker region based on the DCT coefficients, and generating a differential quantization table by distinguishing the detected face region from non-face regions; (e) differentially setting a quantization step size for quantization based on the speaker region; and (f) quantizing the DCT coefficients according to the quantization step size and the differential quantization table.

Preferably, the step (e) comprises the step of differentially setting the quantization step size based on a particular one of the speaker region and the face region. Further, the step (a) comprises the step of estimating motion of the individual by comparing a current frame of the video signal with a reference frame obtained by encoding a previous frame of the video signal and then compensating for motion of the coded previous frame at intervals of pixels on a pixel-to-pixel basis, thereby to detect a most similar pixel, and calculating a motion vector corresponding to the estimated motion of the individual.

The step (b) comprises the step of calculating a background image vector and a foreground image vector according to consistency of a size and a direction of the motion vector from the motion vector, and detecting a speaker region from the background image vector and the foreground image vector. The step (d) comprises the step of comparing a DC (Direct Current) value of a red component with a DC value of a blue component for a same region from DCT coefficients corresponding to the speaker region among the DCT coefficients, and determining a region corresponding to the compared DCT coefficient out of the speaker region as a face region of the speaker if the red component is greater than the blue component and also greater than a prescribed threshold value.

The present invention distinguishes a face region of a speaker from non-face regions and differentially quantizes the face region with a small quantization step size and the non-face regions with a large quantization step size, preventing overload of a video encoder and image degradation of the face region during a visual call. As a result, image degradation of red blocks as well as a moving face region becomes less than that of the other blocks.

The above features and advantages of the present invention will become more apparent from the following detailed description when taken in conjunction with the accompanying drawings in which:
FIG 1 is a block diagram illustrating a conventional video encoder for compressing a digital video signal;
FIGs. 2A and 2B illustrate how image quality is degraded when the identical compressibility or quantization step size is applied to the entire image;
FIG 3 is a block diagram illustrating a video encoder for differentially encoding an image of a speaker during a visual call according to a preferred embodiment of the present invention;
FIGs. 4A to 4D illustrate a process of differentially quantizing a face region and non-face regions from a video signal received at the video encoder of FIG 3;
FIGs. 5A and 5B illustrate examples of images displayed on the screen, to which the quantizer of FIG. 3 applies different quantization step sizes to a face region and non-face regions over the entire image; and
FIG 6 illustrates a method for compressing a video signal by a video encoder according to a preferred embodiment of the present invention.

Several preferred embodiments of the present invention will now be described in detail with reference to the annexed drawings. In the drawings, the same or similar elements are denoted by the same reference numerals even though they are depicted in different drawings. In the following description, a detailed description of known functions and configurations incorporated herein has been omitted for conciseness.

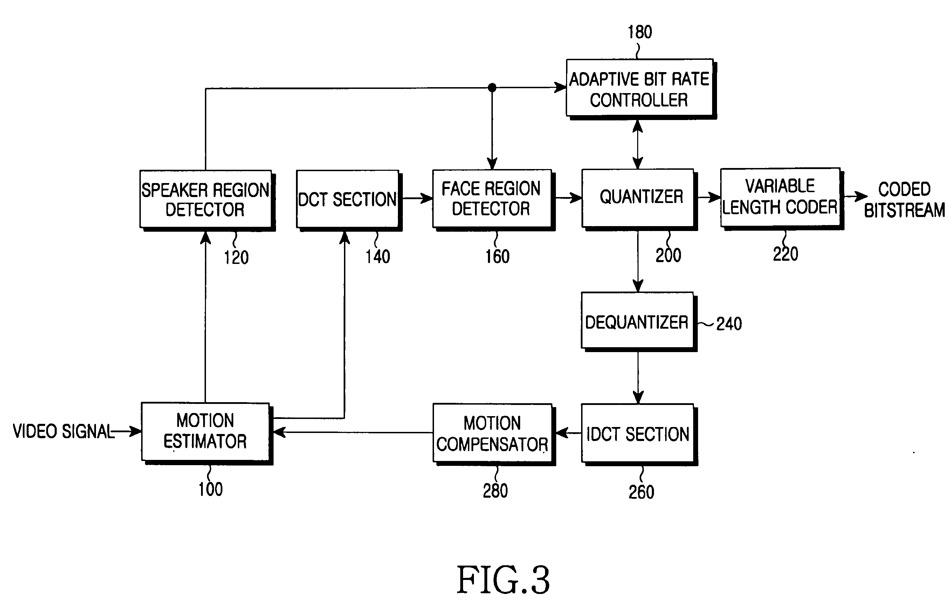

FIG. 3 is a block diagram illustrating a video encoder for differentially encoding an image of a speaker during a visual call according to a preferred embodiment of the present invention. As illustrated, a proposed video encoder includes a motion estimator 100, a speaker region detector 120, a DCT (Discrete Cosine Transform) section 140, a face region detector 160, an adaptive bit rate controller 180, a quantizer 200, a variable length coder 220, a dequantizer 240 an IDCT (Inverse Discrete Cosine Transform) section 260, and a motion compensator 280.

The motion estimator 100 compares a current frame of an input video signal with a reference frame obtained by encoding a previous frame of the input video signal and then performing motion compensation on the coded previous frame at intervals of pixels on a pixel-to-pixel basis, thereby detecting the most similar pixel. The motion estimator 100 determines a motion vector (MV) representing a position relationship between the detected most similar reference area of the reference frame and a macro block of the current frame.

The speaker region detector 120 detects consistency of a size and a direction of motion vectors for the surrounding regions excluding a particular region from the center of a video signal among the motion vectors determined by the motion estimator 100. The speaker region detector 120 calculates an average value for the detected sizes of the motion vectors for the surrounding regions. Specifically, the speaker region detector 120 calculates an average value of average values included within a set deviation value range among the calculated average values. The calculated average value of the average values is defined as a background image vector. The speaker region detector 120 calculates a foreground image vector for the center region except surrounding regions of a video signal by subtracting a background image vector from the motion vector determined by the motion estimator 100. Further, the speaker region detector 120 determines a boundary of a speaker region by gathering foreground image vectors having a size and a direction included within a prescribed range among the foreground image vectors. The speaker region detector 120 detects a rectangular speaker region by performing horizontal and vertical directional scanning on the determined speaker region.

The DCT section 140 DCT-transforms a video signal provided from the motion estimator 100, and generates DCT coefficients. The face region detector 160 compares a red component DC (Direct Current) value with a blue component DC value for the same region from DCT coefficients corresponding to the speaker region detected by the speaker region detector 120 among the DCT coefficients generated by the DCT section 140. As a result of the comparison, if the red component is greater than the blue component and also greater than a prescribed threshold value, the face region detector 160 determines a region corresponding to the compared DCT coefficient out of the speaker region as a face region of the speaker. The threshold value can be arbitrarily set by the user, or can be defined as an optimal value obtained by experiment. The face region detector 160 generates a differential quantization table, information indicating whether to differentially quantize DCT coefficients, based on the result of distinguishing a face region from the speaker region.

The adaptive bit rate controller 180 generates a weight table to be used for control of a quantization step size depending on the speaker region information detected by the speaker region detector 120 and face region information detected by the face region detector 160. Preferably, if a particular region of a corresponding video signal is a face region in a speaker region, the adaptive bit rate controller 180 sets the quantization step size to be less than a reference value, and otherwise, sets the quantization step size to be greater than the reference value.

The quantizer 200 differential quantizes the DCT coefficients outputted from the DCT section 140 according to the differential quantization table generated by the face region detector 160 and the quantization step size outputted from the adaptive bit rate controller 180. The variable length coder 220 converts the quantized DCT coefficients into coded variable length data. The coded variable length DCT coefficients are converted into a bit stream by a bit stream generator (not shown).

The dequantizer 240 dequantizes the DCT coefficients quantized by the quantizer 200. The IDCT section 260 converts the dequantized DCT coefficients into restored pixel data by the block by IDCT. The motion compensator 280 compensates for motion of the pixel data restored by the IDCT section 260. The pixel data motion-compensated by the motion compensator 280 is used as a reference frame for estimating a moving object from the image restored by the motion estimator 100.

In sum, the proposed video encoder distinguishes a face region from non-face regions of the speaker and quantizes the face region and the non-face regions according to different quantization step sizes, instead of applying the same quantization step size to an input video signal. By doing so, it is possible to maintain a reference resolution. As a result, image degradation of red blocks as well as a moving face region becomes less than that of the other blocks.

The proposed video encoder determines a face region by distinguishing a red component from a blue component and then comparing a value of the component with a value of the blue component, and differentially quantizes the determined face region, preventing image degradation of the face region. Alternatively, the video encoder may obtain a rough characteristic of a face region by a user interface, and define a range of the red component as a threshold according to the rough characteristic.

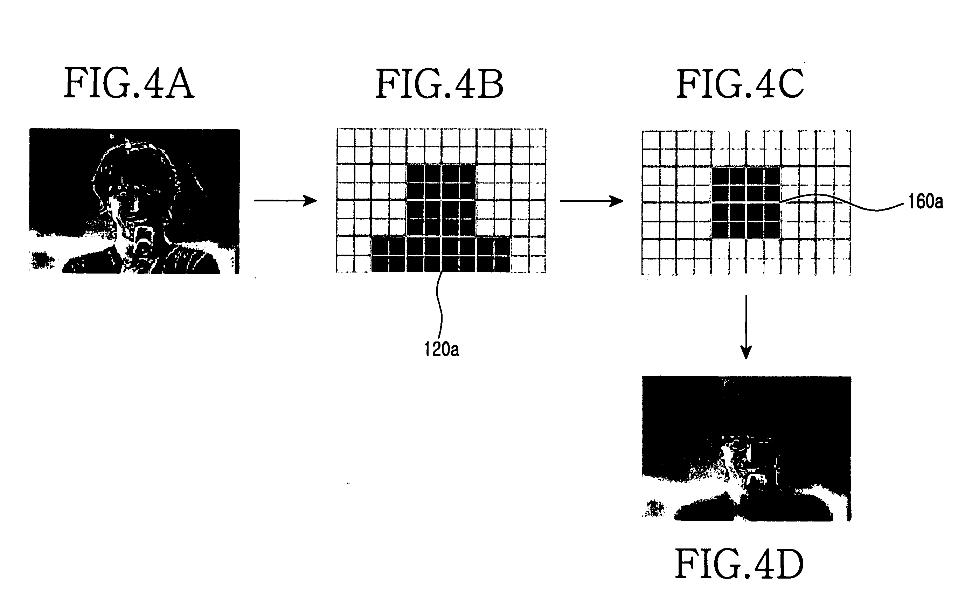

FIGs. 4A to 4D illustrate a process of differentially quantizing a face region and non-face regions from a video signal received at the video encoder of FIG 3. Specifically, FIG 4A illustrates quality of an image, displayed on a screen, for an original video signal received at the motion estimator 100, and FIG. 4B illustrates a situation where a speaker region 120a detected by the speaker region detector 120 is situated on the center region of the screen. Further, FIG. 4C illustrates a situation where a face region 160a of the speaker, detected by the face region detector 160, is separately displayed on the screen, and FIG 4D illustrates an image of a video signal displayed by differentially quantizing the face region 160a and non-face regions by the quantizer 200.

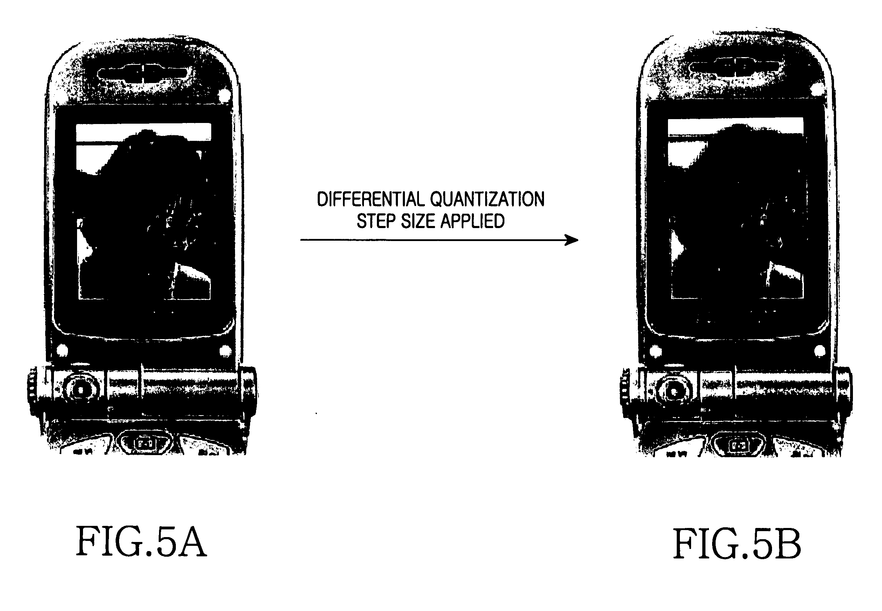

FIGs. 5A and 5B illustrate examples of images displayed on the screen, to which the quantizer 200 of FIG 3 applies different quantization step sizes to a face region and non-face regions over the entire image. As illustrated, for quantization of a particular region, the quantizer 200 applies a quantization step size less than a reference value to a face region of the entire image and a quantization step size larger than the reference value to non-face regions, thus guaranteeing that the face region shall maintain image quality of over the reference value.

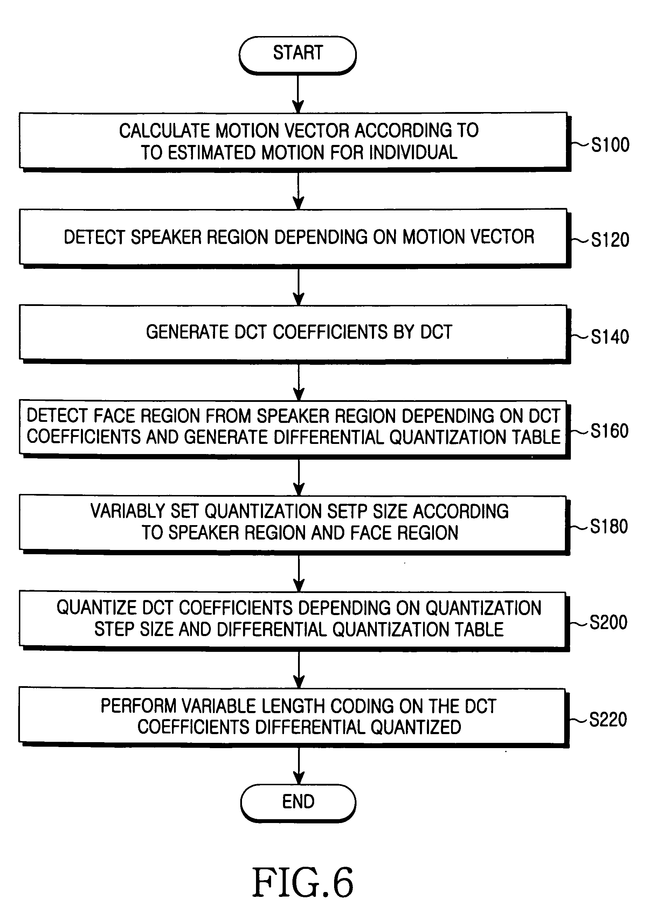

FIG 6 illustrates a method for compressing a video signal by a video encoder according to a preferred embodiment of the present invention. Referring to FIG 6, the motion estimator 100 compares a current frame of an input video signal with a reference frame determined by encoding a previous frame of the input video signal and then compensating for motion of the coded previous frame at intervals of pixels on a pixel-to-pixel basis, thereby to detect the most similar pixel, and calculates a motion vector (MV) representing a position relationship between the detected most similar pixel and a macro block of the current frame (Step S100). The speaker region detector 120 detects consistency of a size and a direction of motion vectors for the surrounding regions excluding a particular region from the center of a video signal among the motion vectors determined by the motion estimator 100, thereby to detect a speaker region of the video signal (Step S120). The DCT section 140 DCT-transforms a video signal provided from the motion estimator 100, and generates DCT coefficients (Step S140).

The face region detector 160 detects a face region of the speaker based on DCT coefficients corresponding to the face region detected by the face region detector 120 among the DCT coefficients generated by the DCT section 140 (Step S160). Preferably, the face region detector 160 compares a red component DC value with a blue component DC value for the same region from DCT coefficients corresponding to the speaker region detected by the speaker region detector 120 among the DCT coefficients generated by the DCT section 140. As a result of the comparison, if the red component is greater than the blue component and also greater than a prescribed threshold value, the face region detector 160 determines a region corresponding to the compared DCT coefficient out of the speaker region as a face region of the speaker. The threshold value can be arbitrarily set by the user, or can be defined as an optimal value obtained by experiment. The face region detector 160 generates a differential quantization table, information indicating whether to differentially quantize DCT coefficients, based on the result of distinguishing a face region from the speaker region.

The adaptive bit rate controller 180 differential sets a quantization step size based on the speaker region information detected by the speaker region detector 120 and the face region information detected by the face region detector 160 (Step S180). Preferably, if a particular region of a corresponding video signal is a face region in the speaker region, the adaptive bit rate controller 180 sets the quantization step size to be less than a reference value, and otherwise, sets the quantization step size to be greater than the reference value.

The quantizer 200 differential quantizes the DCT coefficients outputted from the DCT section 140 according to the differential quantization table generated by the face region detector 160 and the quantization step size outputted from the adaptive bit rate controller 180 (Step S200). The variable length coder 220 converts the DCT coefficients separately differential quantized for the face region and the non-face regions, into coded variable length data (Step S220). The coded variable length DCT coefficients are converted into a bit stream by a bit stream generator (not shown).

Summarizing, the proposed method distinguishes a face region from non-face regions of the speaker and quantizes the face region and the non-face regions according to different quantization step sizes, instead of applying the same quantization step size to an input video signal. By doing so, it is possible to maintain a reference resolution for the face region. As a result, image degradation of red blocks as well as a moving face region becomes less than that of the other blocks.

The proposed method determines a face region by distinguishing a red component from a blue component and then comparing a value of the component with a value of the blue component, and differentially quantizes the determined face region, preventing image degradation of the face region. Alternatively, the method may obtain a rough characteristic of a face region by a user interface, and define a range of the red component as a threshold according to the rough characteristic.

As can be understood from the forgoing description, the present invention distinguishes a face region of a speaker from non-face regions and differentially quantizes the face region in a small quantization step size and the non-face regions in a large quantization step size, preventing overload of a video encoder and image degradation of the face region during a visual call. As a result, image degradation of red blocks as well as a moving face region becomes less than that of the other blocks.

While the invention has been shown and described with reference to a certain preferred embodiment thereof, it will be understood by those skilled in the art that various changes in form and details may be made therein without departing from the scope of the invention as defined by the appended claims.

## Claims

1. A video encoder for encoding a video signal through discrete cosine transform (DCT) and motion estimation, the video encoder comprising:
a motion estimator for estimating motion of an individual from an input video signal, and calculating a motion vector of the individual;
a speaker region detector for detecting a speaker region representing a contour of a speaker from the motion vector;
a DCT section for calculating DCT coefficients by DCT-transforming a video signal outputted from the motion estimator;
a face region detector for detecting a face region of the speaker from the speaker region based on the DCT coefficients, and generating a differential quantization table by distinguishing the detected face region from non-face regions;
an adaptive bit rate controller for differentially setting a quantization step size for quantization based on the speaker region; and
a quantizer for quantizing the DCT coefficients according to the quantization step size and the differential quantization table.

2. The video encoder of claim 1, wherein the adaptive bit rate controller differentially sets the quantization step size based on one of the speaker region and the face region.

3. The video encoder of claim 1 or 2, wherein the motion estimator estimates motion of the individual by comparing a current frame of the video signal with a reference frame, obtained by encoding a previous frame of the video signal and then compensating for motion of the coded previous frame at intervals of pixels on a pixel-to-pixel basis, to detect a most similar pixel, and calculates a motion vector corresponding to the estimated motion of the individual.

4. The video encoder of one of claims 1 to 3, wherein the speaker region detector calculates a background image vector and a foreground image vector according to a size and a direction of the motion vector from the motion vector, and detects a speaker region from the background image vector and the foreground image vector.

5. The video encoder of one of claims 1 to 4, wherein the face region detector compares a DC (Direct Current) value of a red component with a DC value of a blue component for a same region from DCT coefficients corresponding to the speaker region detected by the speaker region detector among DCT coefficients generated by the DCT section, wherein if the red component is greater than the blue component and also greater than a prescribed threshold value, the face region detector determines as a face region of the speaker a region corresponding to the compared DCT coefficient out of the speaker region.

6. The video encoder of one of claims 1 to 5, further comprising a variable length coder for performing variable length coding on the DCT coefficients differentially quantized by the quantizer.

7. The video encoder of one of claims 1 to 6, further comprising:
a dequantizer for performing dequantization on the DCT coefficients differentially encoded by the quantizer;
an inverse discrete cosine transform (IDCT) section for performing IDCT on the dequantized DCT coefficients; and
a motion compensator for compensating for motion of the individual by comparing an IDCT-transformed previous input video signal with an IDCT-transformed input video signal.

8. The video encoder of one of claims 1 to 7, wherein the motion compensator calculates the motion vector for an input video signal based on the motion-compensated video signal from the motion compensator.

9. A video signal compression method for image communication using a video encoder for encoding a video signal through discrete cosine transform (DCT) and motion estimation, the method comprising the steps of:
(a) estimating motion of an individual from an input video signal, and calculating a motion vector of the individual;
(b) detecting a speaker region representing a contour of a speaker from the motion vector;
(c) calculating DCT coefficients by DCT-transforming the video signal;
(d) detecting a face region of the speaker from the speaker region based on the DCT coefficients, and generating a differential quantization table by distinguishing the detected face region from non-face regions;
(e) differentially setting a quantization step size for quantization based on the speaker region; and
(f) quantizing the DCT coefficients according to the quantization step size and the differential quantization table.

10. The video signal compression method of claim 9, wherein step (e) comprises the step of differentially setting the quantization step size based on one of the speaker region and the face region.

11. The video signal compression method of claim 9 or 10, wherein step (a) comprises the step of estimating motion of the individual by comparing a current frame of the video signal with a reference frame, obtained by encoding a previous frame of the video signal and then compensating for motion of the coded previous frame at intervals of pixels on a pixel-to-pixel basis, to detect a most similar pixel, and calculating a motion vector corresponding to the estimated motion of the individual.

12. The video signal compression method of one of claims 9 to 11, wherein step (b) comprises the step of calculating a background image vector and a foreground image vector according to a size and a direction of the motion vector from the motion vector, and detecting a speaker region from the background image vector and the foreground image vector.

13. The video signal compression method of one of claims 9 to 12, wherein step (d) comprises the step of comparing a DC (Direct Current) value of a red component with a DC value of a blue component for a same region from DCT coefficients corresponding to the speaker region among the DCT coefficients, and determining a region corresponding to the compared DCT coefficient out of the speaker region as a face region of the speaker if the red component is greater than the blue component and also greater than a prescribed threshold value.

14. The video signal compression method of one of claims 9 to 13, further comprising the step of performing variable length coding on the DCT coefficients differentially encoded in step (f).

15. The video signal compression method of one of claims 9 to 14, further comprising the steps of:
performing dequantization on the DCT coefficients differentially encoded in step (f);
performing inverse discrete cosine transform (IDCT) on the quantized DCT coefficients; and
compensating for motion of the individual by comparing the IDCT-transformed input video signal with an IDCT-transformed input video signal.

16. The video signal compression method of one of claims 9 to 15, wherein step (a) comprises the step of calculating the motion vector for an input video signal based on the video signal motion-compensated in the motion compensation step.
